# EUROPEAN PATENT APPLICATION

(11) **EP 2 632 156 A2**
(43) Date of publication of application: **28.08.2013**
(21) Application number: 13155934.6
(22) Date of filing: 20.02.2013
(51) Int. Cl.: H04N 7/14

(54) **Method and apparatus for two way communication**

(30) Priority: 27.02.2012 KR 20120019729
(71) Applicant: Samsung Electronics Co., Ltd, Gyeonggi-do 443-742 (KR)
(72) Inventor: Yu, Yongjun, 443-742 Gyeonggi-do (KR)
(74) Representative: Birchenough, Lewis

(57) **Abstract**

A method and an apparatus for two-way communication are provided. An edit data recognition method for a device includes establishing a communication channel with a server, recognizing original data displayed on an external screen, recognizing edit data corresponding to data comprising at least one of an addition and a deletion to the original data, and sending the edit data to the server through the communication channel.

## Description

### BACKGROUND OF THE INVENTION

### 1.Field of the Invention:

The present invention relates to a method and apparatus for two-way communication. More particularly, the present invention relates to a method and apparatus that enable editing of displayed data with a pointer and recognition of the edited data, and to a method and apparatus that enable a server and clients to exchange data and check attendance.

### 2. Description of the Related Art:

In recent years, mobile devices such as tablets, smartphones and laptops supporting note-taking functions have been frequently used for video lectures or video conferences in schools, companies, and the like. In a video conference, image data stored in a mobile terminal is output on a screen, wall, or whiteboard through a projector so that a number of participants can simultaneously view the same information.

In a video lecture, when image data stored in a mobile terminal is output on a whiteboard through a projector, the presenter or an attendee may wish to draw a picture on the whiteboard or erase a character output thereon with a writing instrument. Later, the presenter or attendee may wish to store data reflecting the drawn picture or erasure on the whiteboard in the mobile terminal.

In addition, the presenter and attendees may wish that attendance-checking is automatically conducted during lecturing and questions and answers are shared in real time.

Therefore, a need exists for a method and apparatus that enable editing of displayed data with a pointer and recognition of the edited data. Furthermore, a need exists for a method and apparatus that enable a server and clients to exchange data and check attendance.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method and an apparatus wherein, in a state where original data is output on a screen, when a user or participant adds or erases characters or the like to or from the screen, the added or deleted items are recorded as edit data for later use.

Another aspect of the present invention also is to provide a method and apparatus that enable two-way communication between the presenter and attendees in a video lecture.

In accordance with an exemplary embodiment of the present invention, an edit data recognition method for a device is provided. The method includes establishing a communication channel with a server, recognizing original data displayed on an external screen, recognizing edit data corresponding to data comprising at least one of an addition and a deletion to the original data, and sending the edit data to the server through the communication channel.

In accordance with an aspect of the present invention, an edit data recognition device is provided. The device includes a communication unit configured to send and to receive data to and from a server, a sensor unit configured to recognize edit data corresponding to data comprising at least one of an addition and a deletion to original data displayed on an external screen, and a control unit configured to control an operation to send the edit data to the server.

In accordance with another aspect of the present invention, there is provided a method for two-way communication between a server and a client, including, receiving, by the server, authentication information from the client, establishing, by the server, a communication channel with the client, and sending, by the server, lecture data to the client, wherein the lecture data is original data or edit data corresponding to data comprising at least one of an addition and a deletion to the original data.

In accordance with another aspect of the present invention, a communication apparatus for a server performing two-way communication with a client is provided. The communication apparatus includes a communication unit configured to send and to receive data to and from the client, an input unit configured to accept user input, and a control unit configured to control a process of receiving authentication information from the client, establishing a communication channel with the client, and sending lecture data to the client, wherein the lecture data is original data or edit data corresponding to data comprising at least one of an addition and a deletion to the original data.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a sequence diagram of a data generation procedure between an edit image recognition device and a lecturing server according to an exemplary embodiment of the present invention;

FIG. 2 is a block diagram of an edit image recognition device such as, for example, the edit image recognition device illustrated in FIG. 1 according to an exemplary embodiment of the present invention;

FIG. 3 is a block diagram of a lecturing server such as, for example, the lecturing server illustrated in FIG. 1 according to an exemplary embodiment of the present invention;

FIG. 4 illustrates an external appearance of a lecturing server and an edit image recognition device according to an exemplary embodiment of the present invention;

FIGs. 5A to 5C illustrates editing lecturing materials displayed on an external screen and recording edited items as data according to an exemplary embodiment of the present invention;

FIG. 6 is a sequence diagram illustrating two-way communication between a lecturing server and an attendee client according to an exemplary embodiment of the present invention; and

FIGs. 7A and 7B are screen representations illustrating attendance checking through face recognition, lecture material sharing, and questioning and answering in real time according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the description, the term "data" refers to information that is generated by a mobile terminal or downloaded from another mobile terminal. Data may include presentation data that can be output through a projector and image data transmitted during a video call.

"Original data" refers to unedited data that is displayed on a screen by the lecturing server through a projector. Original data may correspond to document data, digital broadcast data, music data, moving image data, image data, or the like. For example, data that is displayed on a screen through a projector and that is not modified yet through editing may become original data. Preferably, original data may be in a document format such as "ppt", "doc" or "hwp".

"Edit data" refers to data that is processible by a mobile terminal and is obtained by converting, in a state where original data has been output on a screen, pictures or characters drawn or written directly on the screen with a writing instrument like a pointer. Edit data may be used interchangeably with modification data.

In the description, mobile terminals are used as a lecturing server and an attendee client. Here, a mobile terminal may be a mobile communication terminal, a Portable Multimedia Player (PMP), a Personal Digital Assistant (PDA), smartphone, or a tablet personal computer.

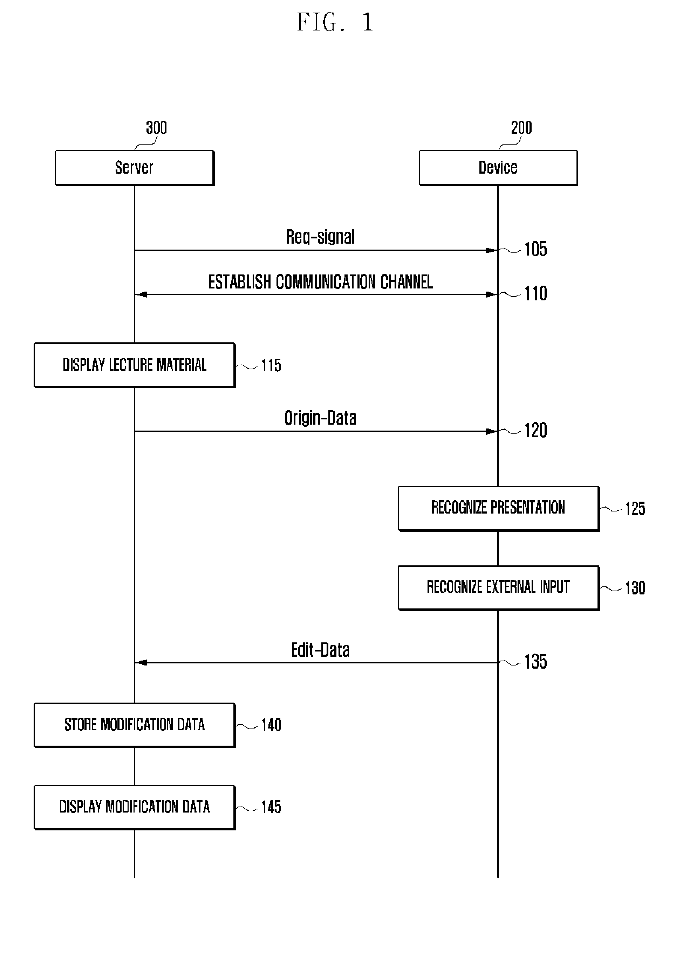

FIG. 1 is a sequence diagram of a data generation procedure between an edit image recognition device 200 and a lecturing server 300 according to an exemplary embodiment of the present invention.

Referring to FIG. 1, the lecturing server 300 sends a request signal to the edit image recognition device 200 at step 105. The lecturing server 300 and the edit image recognition device 200 establish a communication channel at step 110. Preferably, the communication channel is based on short-range wireless communication such as Bluetooth communication, or the like.

The server 300 outputs a lecture material on a whiteboard through a projector at step 115. Here, preferably, projected images are formed on an external screen on which a user may directly make notes, such as a whiteboard, or the like. The server 300 may output only light to the projector without data. The server 300 may output the same data to its display unit and to the projector.

The server 300 may send the lecture material as original data to an attendee client 400 (not shown) and the edit image recognition device 200 through the communication channel at step 120. Here, step 120 is not a mandatory step.

Thereafter, the edit image recognition device 200 recognizes an image presented on the whiteboard at step 125. For example, the device 200 may recognize a presented image as original data without reception of lecture materials from the server 300.

The edit image recognition device 200 recognizes modifications (such as written or erased pictures or characters) made on the whiteboard at step 130. Recognition of edit images using sensors is described later with reference to the drawings.

The edit image recognition device 200 sends edit data to the lecturing server 300 through the communication channel at step 135. Upon reception of the edit data, the lecturing server 300 stores the edit data at step 140 and may output the edit data to the screen at step 145.

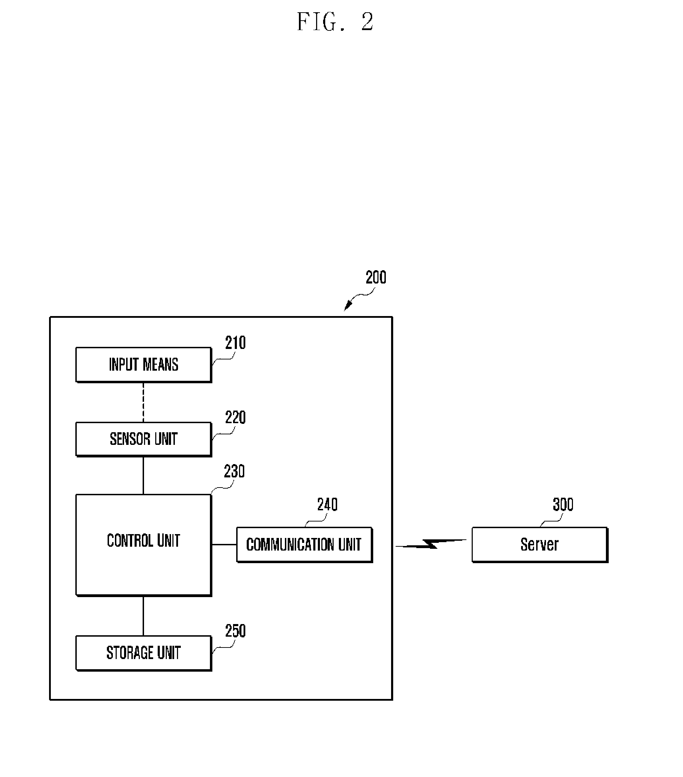

FIG. 2 is a block diagram of the edit image recognition device such as, for example, the edit image recognition device 200 illustrated in FIG. 1 according to an exemplary embodiment of the present invention.

Referring to FIG. 2, the edit image recognition device 200 includes a sensor unit 220, a control unit 230, and a communication unit 240.The edit image recognition device 200 may further include an input means 210 like a pointer or the like, and a storage unit 250.

The sensor unit 220 includes various sensors, such as an optical sensor, a photo sensor, a camera sensor, and the like that converts an optical signal into an electrical signal. The sensor unit 220 further includes a signal processor (not shown) to convert an analog image signal into digital data. Here, the camera sensor may be a Charge-Coupled Device (CCD) sensor or Complementary Metal-Oxide-Semiconductor (CMOS) sensor, and the signal processor may be a Digital Signal Processor (DSP). The sensor unit 220 may send signals generated by the sensors to the control unit 230.

The edit image recognition device 200 may include an input means 210 like a pointer or the like. The input means 210 is used to write, draw or erase items (such as pictures or characters) on an image presented on the screen. According to exemplary embodiments of the present invention, the input means 210 is not necessarily required because the device 200 may recognize edit data generated by a regular writing instrument through the sensor unit 220.

The communication unit 240 is used to communicate with an external terminal or device in the vicinity of the edit image recognition device 200. The communication unit 240 may be made of a Bluetooth module, a Wi-Fi module, or the like. According to exemplary embodiments of the present invention, the communication unit 240 is used to send edit data recognized by the sensor unit 220 to the lecturing server 300.

The storage unit 250 stores programs and data needed for operation of the edit image recognition device 200. The storage unit 250 may be composed of volatile storage media, nonvolatile storage media, and a combination thereof. Semiconductor memories such as RAM, DRAM and SRAM are examples of volatile storage media. According to exemplary embodiments of the present invention, the storage unit 250 stores edit data as image or text data.

The control unit 230 controls states and operations of individual components of the edit image recognition device 200. In particular, the control unit 230 may generate (or recover) original data from sensing results produced by the sensor unit 220 sensing presented images of lecture materials. The control unit 230 may also generate edit data from sensing results produced by the sensor unit 220 sensing modifications made by a user to the presented images.

For example, when the lecturing server 300 displays a lecture material on a screen on which a user may directly draw, such as a whiteboard, the user may write a character or draw a picture on the screen using a writing instrument. The control unit 230 may recognize the added or modified item on the basis of sensing signals from the sensor unit 220, and may generate edit data corresponding to the recognized item.

According to exemplary embodiments of the present invention, the control unit 230 may generate edit data as image or text data. The control unit 230 may combine original data and edit data into new data. The control unit 230 may store the generated data in the storage unit 250, and/or send the same to the lecturing server 300 through the communication unit 240.

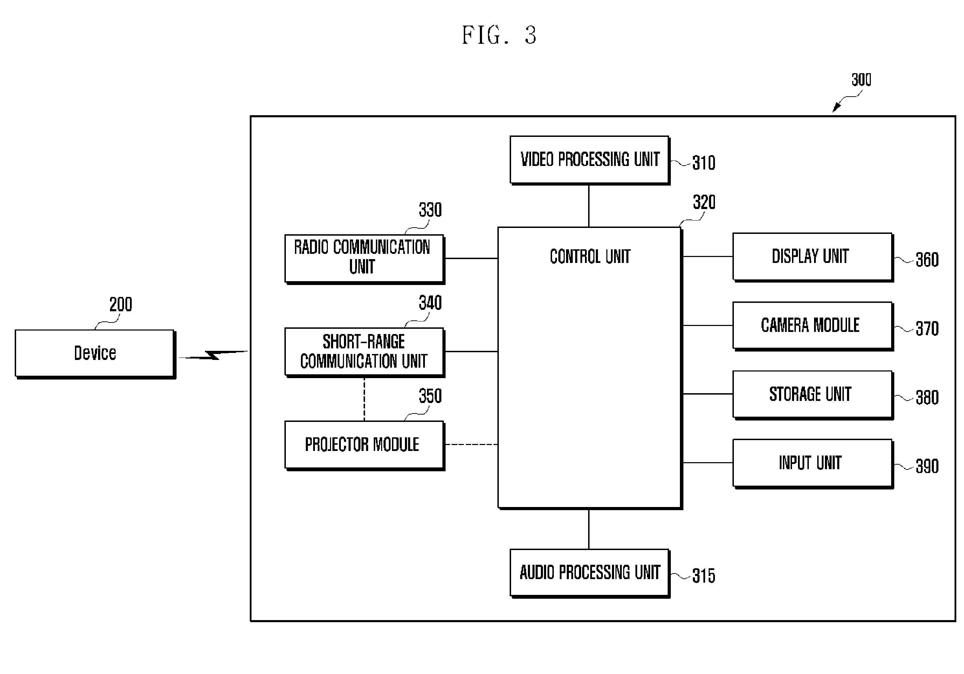

FIG. 3 is a block diagram of the lecturing server such as, for example, the lecturing server 300 illustrated in FIG. 1 according to an exemplary embodiment of the present invention.

Referring to FIG. 3, the lecturing server 300 may include a video processing unit 310, an audio processing unit 315, a control unit 320, a radio communication unit 330, a short-range communication unit 340, a display unit 360, a camera module 370, a storage unit 380, and an input unit 390.

The radio communication unit 330 may include a Radio Frequency (RF) transmitter for upconverting the frequency of a signal to be transmitted and for amplifying the signal, and an RF receiver for low-noise amplifying a received signal and for downconverting the frequency of the received signal. The radio communication unit 330 may receive data through a radio channel and forward the received data to the control unit 320, and transmit data from the control unit 320 through the radio channel. In particular, the radio communication unit 330 may send data from the control unit 320 to an attendee client 400 (not shown) or an external device.

The audio processing unit 315 includes a codec. The codec may have a data codec for processing packet data and the like, and an audio codec for processing an audio signal such as a voice signal. The audio processing unit 315 converts a digital audio signal into an analog audio signal through the audio codec to reproduce the analog audio signal through a speaker SPK, and converts an analog audio signal from a microphone MIC into a digital audio signal.

According to exemplary embodiments of the present invention, the lecturing server 300 may further include a projector module 350. While being an internal component of the lecturing server 300, the projector module 350 may also be connected to an external device through the short-range communication unit 340 based on, for example, Bluetooth for short-range communication or the like.

The projector module 350 outputs images containing text, pictures, photographs or moving images to a screen. The projector module 350 may include a radiation lamp (not shown) for emitting light and a focus adjuster (not shown) for adjusting the focus of an image presented on the screen. Focus adjustment may be performed through the focus adjuster under control of the control unit 320, or performed by a user manipulating a separate adjustment means like a wheel key installed in the lecturing server 300.

The camera module 370 captures an image of a target object. The camera module 370 includes a camera sensor (not shown) to convert an optical signal into an electrical signal, and a signal processor (not shown) to convert an analog image signal into digital data. According to exemplary embodiments of the present invention, the camera module 370 is used to take a head shot of a presenter or attendee in a video conference or lecture.

The short-range communication unit 340 is used to communicate with an edit image recognition device 200, an attendee client 400, an external terminal or other external device in the vicinity of the lecturing server 300. The short-range communication unit 340 may include a Bluetooth module, an infrared communication module, a ZigBee module, a UWB communication module, a Wi-Fi module, or the like. According to exemplary embodiments of the present invention, the short-range communication unit 340 is used to transmit data generated in the lecturing server 300 to an external terminal or device.

The storage unit 380 stores programs and data needed for operation of the lecturing server 300. The storage unit 380 may be divided into a program section and a data section. The storage unit 380 may be composed of volatile storage media, nonvolatile storage media, and a combination thereof. Semiconductor memories such as RAM, DRAM and SRAM are examples of volatile storage media. A hard disk is an example of nonvolatile storage media.

The input unit 390 receives key signals for controlling the lecturing server 300 and forwards the key signals to the control unit 320. The input unit 390 may include a keypad having alphanumeric keys and direction keys in a QWERTY or 3*4 layout, and a touch panel. The input unit 390 is used to modify an image displayed on the screen according to user input.

In an exemplary embodiment, a keypad of an external device may be used as the input unit 390 of the lecturing server 300. For example, when the lecturing server 300 is connected through the short-range communication unit 340 to an external Bluetooth device, the keypad installed in the Bluetooth device can be used as the input unit 390.

The display unit 360 may be realized using Liquid Crystal Display (LCD) technology. The display unit 360 provides the user with various information such as menus, input data and function setting options in a visual form.

In the lecturing server 300, the display unit 360 may display an image identical to the image that is output by the projector module 350. When the camera module 370 takes a shot of an image on an external screen, the display unit 360 may display preview images. When edit data received from an edit image recognition device 200 is stored in the storage unit 380, the control unit 320 may control the display unit 360 to display the received edit data. Thereby, the user may determine whether specific data is created as intended.

The control unit 320 controls overall operations of individual components of the lecturing server 300.

In one exemplary embodiment of the present invention, the control unit 320 may send lecture materials and edit data from the edit image recognition device 200 to an attendee client 400. The control unit 320 may receive authentication information from an attendee client 400 to check attendance.

The control unit 320 controls a process of receiving a question message from an attendee client 400, creating an answer message by the presenter using the input unit 390, and sending the answer message to the attendee client 400.

When the control unit 320 stores edit data received from the edit image recognition device 200, cross-reference information indicating a portion of original data to which the edit data pertains is stored together with the edit data. For example, when edit data indicates presence of a mark written by a user at a specific chapter heading in a table-of-contents page, the control unit 320 may store cross-reference information matching the edit data with a portion of original data containing the chapter material.

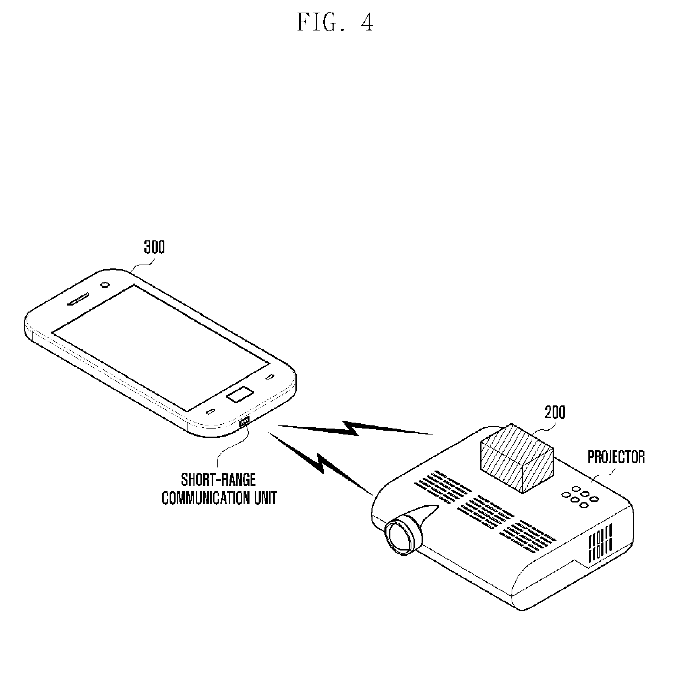

FIG. 4 illustrates an external appearance of a lecturing server 300 and an edit image recognition device 200 according to an exemplary embodiment of the present invention.

Referring to FIG. 4, a projector is depicted as being an entity external to the lecturing server 300. However, the projector module 350 of the lecturing server 300 may be used instead of the external projector.

In FIG. 4, the lecturing server 300 and the edit image recognition device 200 are connected through short-range wireless communication. However, the lecturing server 300 and the edit image recognition device 200 may also be connected directly through a USB cable.

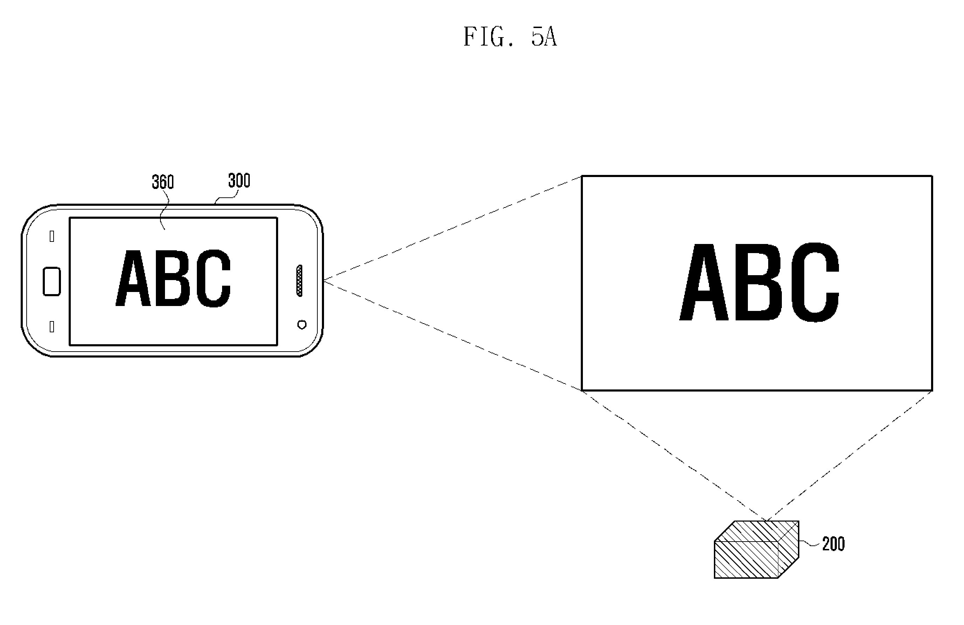

FIGs. 5A to 5C illustrate editing lecturing materials displayed on an external screen and recording edited items as data according to an exemplary embodiment of the present invention. According to exemplary embodiments of the present invention, the external screen may be a whiteboard.

Referring to FIG. 5A, the lecturing server 300 outputs a lecture material through the projector module 350 (not shown) to an external screen. In an exemplary embodiment of the present invention, the lecturing server 300 may supply the same data to the projector module 350 and to the display unit 360, so that the projector module 350 and the display unit 360 produce the same image. The edit image recognition device 200 is configured to detect the data being displayed through the projector module 350 (e.g., by detecting the data on the external screen).

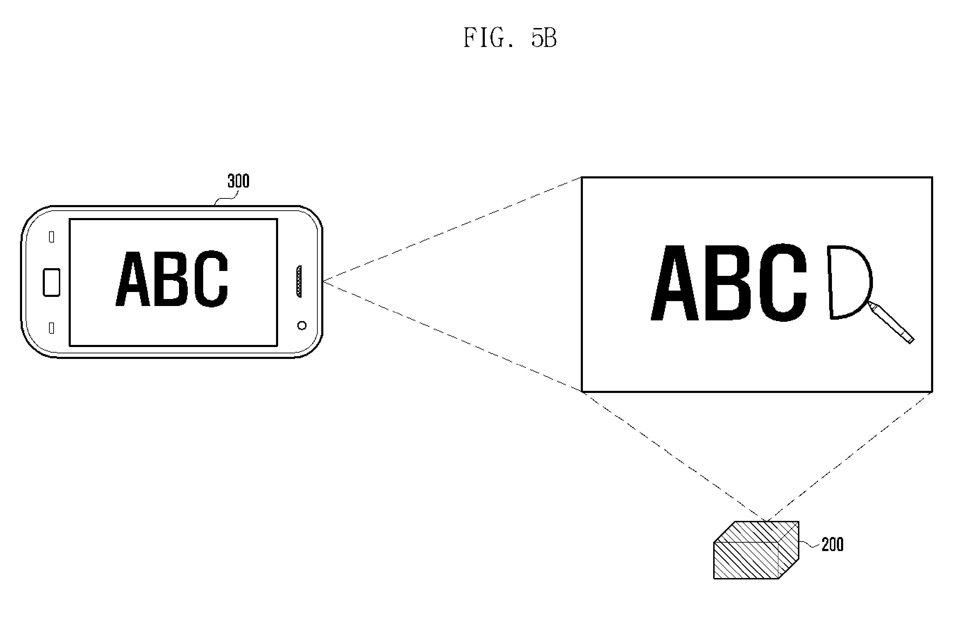

Referring to FIG. 5B, while the lecturing server 300 outputs an image "ABC" on the screen through the projector module 350 (not shown), a user writes a character 'D' next to "ABC" on the screen. In this case, the lecturing server 300 is unable to recognize the character 'D' added to the screen. However, the edit image recognition device 200 recognizes the character 'D' added to the screen with the help of the sensor unit 220 (not shown).

Here, the edit image recognition device 200 identifies coordinates of the added character 'D'. The edit image recognition device 200 may detect additions or deletions by identifying coordinates of component images on the screen. The edit image recognition device 200 creates edit data in a text or image form corresponding to the added character 'D', and sends the edit data to the lecturing server 300.

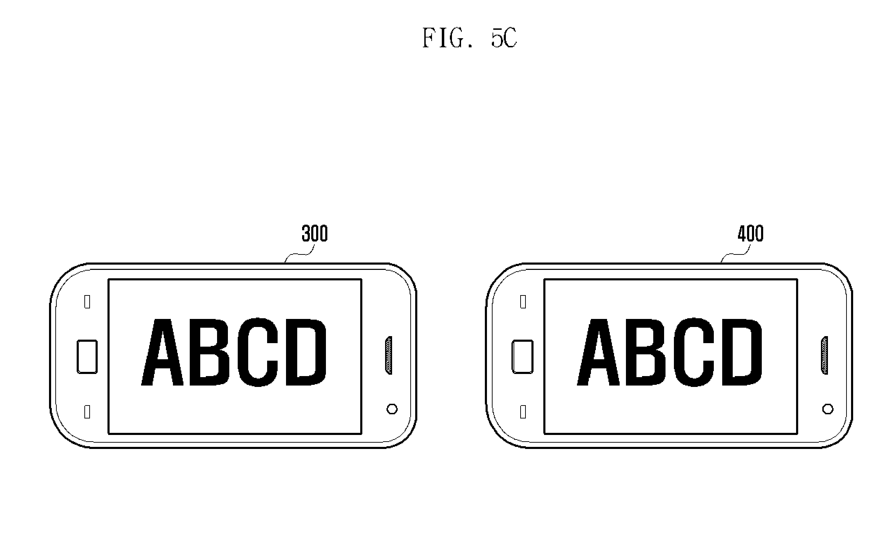

Referring to FIG. 5C, the lecturing server 300 sends edit data received from the edit image recognition device 200 to an attendee client 400. As shown in FIG. 5C, the character 'D' added only to the external screen is displayed by mobile terminals after digital processing.

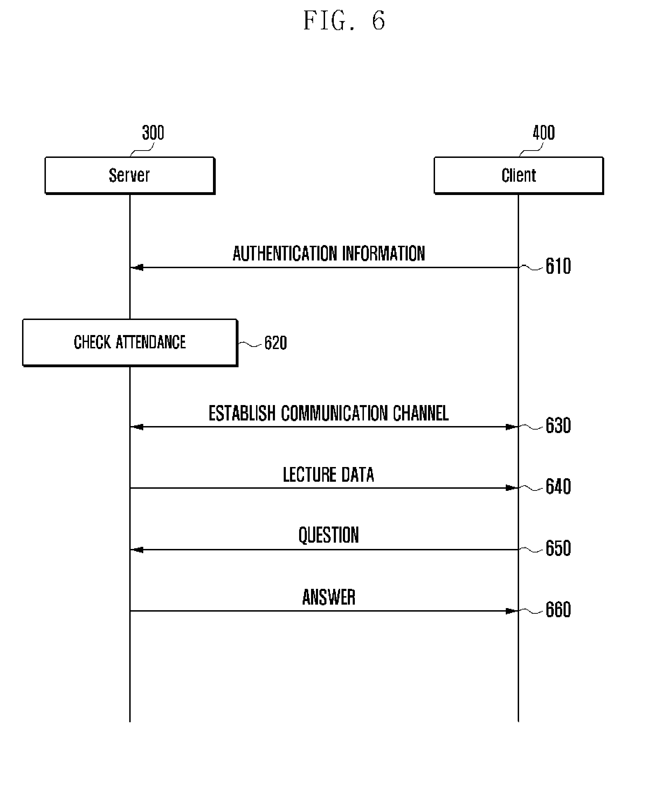

FIG. 6 is a sequence diagram illustrating two-way communication between the lecturing server 300 and an attendee client 400 according to an exemplary embodiment of the present invention.

Referring to FIG. 6, the attendee client 400 sends authentication information to the lecturing server 300 at step 610. Here, the authentication information may be a serial number or network information specific to the attendee client 400, or be account information of the attendee such as attendee ID and password. Preferably, the authentication information is information based on a head shot of the attendee.

The lecturing server 300 authenticates the attendee client 400 and checks attendance on the basis of the received authentication information at step 620.

After successful authentication, the lecturing server 300 and the attendee client 400 establish a communication channel at step 630. Here, the communication channel may be based on Wi-Fi, peer-to-peer networking, or the like.

The lecturing server 300 sends lecture data to the attendee client 400 at step 640. Here, the lecturing server 300 may also output the lecture data through the projector module 350 to an external screen. When a modification (addition or deletion) is made on the screen, corresponding edit data may be sent to the attendee client 400 according to the procedure illustrated in FIG. 1.

During the lecture, the attendee may ask a question and the presenter may answer the question. For example, the attendee client 400 may send a question message composed using the input means 210 to the lecturing server 300 at step 650. The lecturing server 300 may send an answer message composed using the input unit 390 to the attendee client 400 at step 660.

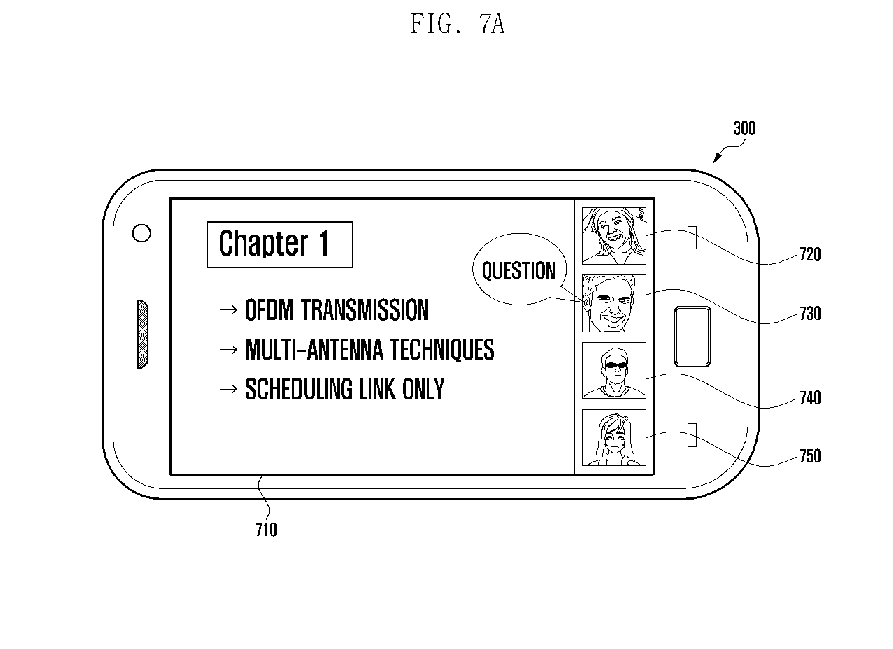

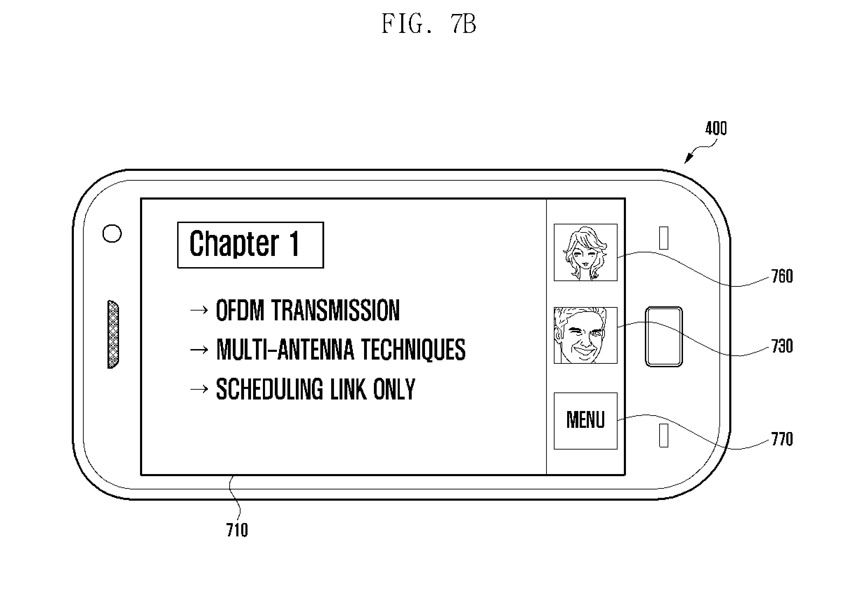

FIGs. 7A and 7B are screen representations illustrating attendance checking through face recognition, lecture material sharing, and questioning and answering in real time according to an exemplary embodiment of the present invention.

Referring to FIG. 7A, a lecture scene is shown on the display unit 360 of the lecturing server 300.

Reference numeral 710 indicates a region in which a lecture material is displayed. The same lecture material may be output to an external screen through the projector module 350 (not shown). An addition or deletion made to the image displayed in the region 710 may be recorded as edit data by the edit image recognition device 200 (not shown).

Reference numerals 720 to 750 indicate head shot regions for lecture attendees. For example, each head shot region 720 to 750 may correspond to a region in which a head shot or other indicia for a lecture attendee. The lecturing server 300 may receive head shot information from attendee clients 400 (not shown), display individual face shots as shown in FIG. 7A, and check attendance. Although four head shots are viewable in FIG. 7A, head shots of all the attendees may be viewed on the display unit 360 through a drag action. When a question is received from an attendee as indicated by reference numeral 730, only the face shot of the attendee may be shown.

Referring to FIG. 7B, a lecture scene is shown on the display unit of an attendee client 400. Reference numeral 710 indicates a region in which a lecture material received from the lecturing server 300 (not shown) is displayed. Reference numeral 760 indicates a region in which the head shot of the presenter is displayed, and reference numeral 730 indicates a region in which the head shot of the attendee is displayed. Reference numeral 770 indicates a region for menu selection, and the attendee may send a question or a request for data using the region 770. For example, the attendee may select region 770 which may cause the attendee client 400 to display a menu from which the attendee may select to send a question or a request for data.

In a feature of the exemplary embodiments of the present invention, the method and apparatus enable, in a state in which image data has been output on an external screen in a video lecture, pictures or characters that are drawn or written by a user or participant on the screen to be recognized as edit data. Thereby, the items added on the screen can be used by the presenter and attendees. In addition, the method and apparatus enable smooth two-way communication between the presenter and attendees in a video lecture.

While the invention has been shown and described with reference to certain exemplary embodiments thereof, it will be understood by those skilled in the art that various changes in form and details may be therein without departing from the spirit and scope of the present invention as defined in the appended claims and their equivalents.

## Claims

1. An edit data recognition method for a device, the method comprising:
establishing a communication channel with a server;
recognizing original data displayed on an external screen;
recognizing edit data corresponding to data comprising at least one of an addition and a deletion to the original data; and
sending the edit data to the server through the communication channel.

2. The method of claim 1, wherein recognizing edit data comprises recognizing the edit data using sensors operatively connected to the device.

3. The edit method of claim 2, wherein the recognizing of the original data comprises one of:
receiving the original data from the server through the communication channel; and
recognizing the original data using sensors operatively connected to the device.

4. The method of claim 3, wherein the establishing of the communication channel comprises establishing a short-range wireless channel with the server through a short-range communication module of the device.

5. An edit data recognition device, the device comprising:
a communication unit configured to send and to receive data to and from a server;
a sensor unit configured to recognize edit data corresponding to data comprising at least one of an addition and a deletion to original data displayed on an external screen; and
a control unit configured to control an operation to send the edit data to the server.

6. The device of claim 5, wherein the control unit is further configured to control at least one of the communication unit to receive the original data from the server, and the sensor unit to recognize the original data.

7. The device of claim 6, wherein the communication unit includes a short-range communication module, and
wherein the control unit is further configured to control the communication unit to establish a short-range wireless channel with the server.

8. A method for two-way communication between a server and a client, the method comprising:
receiving, by the server, authentication information from the client;
establishing, by the server, a communication channel with the client; and
sending, by the server, lecture data to the client, wherein the lecture data is original data or edit data corresponding to data comprising at least one of an addition and a deletion to the original data.

9. The method of claim 8, further comprising checking, by the server, attendance on the basis of the received authentication information.

10. The method of claim 9, wherein the authentication information includes face shot information of an attendee, and
wherein the checking of attendance comprises checking attendance of an attendee on the basis of the face shot information.

11. The method of claim 10, further comprising:
receiving, by the server, a question message from the client after communication channel establishment; and
sending, by the server, an answer message to the client.

12. A communication apparatus for a server performing two-way communication with a client, the communication apparatus comprising:
a communication unit configured to send and to receive data to and from the client;
an input unit configured to accept user input; and
a control unit configured to control a process of receiving authentication information from the client, establishing a communication channel with the client, and sending lecture data to the client, wherein the lecture data is original data or edit data corresponding to data comprising at least one of an addition and a deletion to the original data.

13. The communication apparatus of claim 12, wherein the control unit checks attendance of the client on the basis of the authentication information.

14. The communication apparatus of claim 13, wherein the authentication information includes head shot information of an attendee, and
wherein the control unit checks attendance of the client on the basis of the head shot information.

15. The communication apparatus of claim 14, wherein the control unit controls, in response to reception of a question message from the client, the input unit to accept user input for creating an answer message, and controls the communication unit to send the answer message to the client.
